# EUROPÄISCHE PATENTSCHRIFT

(11) **EP 0 674 124 B1**
(45) Veröffentlichungstag und Bekanntmachung des Hinweises auf die Patenterteilung: **06.06.2001**
(21) Anmeldenummer: 95104150.8
(22) Anmeldetag: 21.03.1995
(51) Int. Cl.: F16H 59/02, F16H 61/26

(54) **Gelenk zwischen einem Getriebebetätigungsglied und einer Getriebegangschaltvorrichtung**
Linkage between gear shifter mechanism and gear selector
Elément de tringlerie de changement de vitesses, situé entre l'élément d'actuation et de sélection

(30) Priorität: 23.03.1994 DE 4410013
(43) Veröffentlichungstag der Anmeldung: 27.09.1995
(73) Patentinhaber: WOCO Franz-Josef Wolf & Co., D-63628 Bad Soden-Salmünster (DE)
(72) Erfinder: Wolf, Franz Josef, D-63628 Bad Soden-Salmünster (DE); Hermann, Waldemar, D-63637 Jossgrund-Lettgenbrunn (DE); Kaminski, Peter, D-63571 Gelnhausen 4 (DE); Baum, Dieter, D-63584 Gründau 5 (DE); Korn, Alexander, D-63628 Bad Soden-Salmünster (DE)
(74) Vertreter: Jaeger, Klaus, Dipl.-Chem. Dr.

(56) Entgegenhaltungen:
- EP-A- 0 277 324
- DE-A- 2 601 026
- DE-A- 4 100 574
- DE-U- 9 414 598

## Beschreibung

Die vorliegende Erfindung betrifft ein Gelenk zwischen einem Getriebebetätigungsglied und einer Getriebegangschaltvorrichtung gemäß dem Oberbegriff des Anspruchs 1.

Im Bereich der Kraftfahrzeugtechnik und hier insbesondere im Bereich des Baus und des Betriebs von Personenkraftwagen ist es aufgrund gestiegener Komfortanforderungen der Käufer und Benutzer derartiger Personenkraftwagen erforderlich, diesen Komfortanforderungen in zunehmender Weise Rechnung zu tragen. Eine Vielzahl dieser Personenkraftwagen weist ein vom Fahrer handschaltbares Getriebe auf, wobei dieses entweder direkt mit dem Motor verblockt oder aber im Falle einer sogenannten "Transaxle"-Struktur vom Motor getrennt an der Kraftfahrzeugkarrosserie angeordnet ist.

Im erstgenannten Fall werden die beim Motorlauf unvermeidbaren Vertikal- und Kippschwingungen über das Getriebe und das Getriebebetätigungsglied und die Getriebeschaltvorrichtung auf den im Fahrgastinnenraum angeordneten Schalthebel übertragen, sofern hierbei nicht für eine ausreichende Entkopplung der Schwingungssysteme gesorgt wird. Auch beim zuletzt genannten Fall können sich beispielsweise beim normalen Fahrbetrieb auftretende Schwingungen und hierbei insbesondere von der Momentübertragung im Getriebe hervorgerufene Schwingungen akkustisch auf den Gangschalthebel und damit in den Fahrzeuginnenraum fortsetzen, wenn wiederum nicht für eine ausreichende Entkoppelung dieser Schwingungssysteme gesorgt wird.

Aus der DE-A-41 00 574 ist bereits ein entsprechendes Gelenk zwischen einem Getriebe und dessen Gangschaltmechanismus mit Fernbetätigung bekannt, das demgemäß insbesondere für die sogenannte "Transaxle"-Bauweise vorgesehen ist.

Dieses bekannte Gelenk weist aber eine Vielzahl von Nachteilen auf. So ist es beispielsweise aufwendig aufgebaut und damit teuer, was insbesondere bezüglich der im Kraftfahrzeugbau vorherrschenden Massenproduktion von Nachteil ist. So besitzt dieses bekannte Gelenk zwei Gelenkteile, die über ein aufwendig ausgebildetes Koppelteil miteinander kraftschlüssig verbunden sind. Zwischen dem der eigentlichen Kraftübertragung dienenden Koppelteil und dem zur Festlegung des Koppelteils im jeweiligen Gelenkteil vorgesehenen Gelenkzapfen ist jeweils ein rohrförmiger elastisch verformbarer Körper angeordnet, welcher dafür sorgen soll, daß bei Betätigung des Gangschalthebels im Fahrzeuginnenraum zunächst ein weiches Ineinandergreifen der beiden Gelenkteile über das Koppelteil sichergestellt ist und nach einer gewissen Verformung dieser elastischen Körper dann der Kraftschluß letztendlich stattfindet, indem das starr ausgebildete Koppelteil mit ebenfalls starr ausgebildeten Anschlagringen in Eingriff kommt.

Während der Verformungsbewegung der elastischen rohrförmigen Körper findet dabei zwischen dem starren Koppelteil und den gleichfalls starren Anschlagringen eine Relativbewegung statt. Es liegt in der Natur der Dinge, daß aufgrund des Aufeinanderliegens dieser starren Teile die Übertragung störender Schwingungen geradezu gefördert wird und daß, aufgrund der Relativbewegung zwischen diesen starren Teilen eine den Abrieb und damit den Verschleiß fördernde Reibung stattfindet.

Es bedeutet dies mit anderen Worten, daß das bekannte Gelenk nicht dazu in der Lage ist, über einen längeren Betriebszeitraum die störende Schwingungsübertragung zwischen dem Fahrzeuggetriebe und dem Kraftfahrzeuginnenraum sicher zu unterbinden. Gleichzeitig ist es aufgrund des durch die genannte Relativbewegung bedingten Verschleißes wenig ausfallsicher und damit und aufgrund der Vielzahl der verwendeten Bauteile teuer.

Die DE-A-2601026 offenbart ein gattungsgemäßes gelenk, dessen vier Lagerzapfen jeweils in einer umschließenden Elastomerhülse aufgenommen sind. Durch diese Hülsen werden Geräusche und Schwingungen verhindert.

Der vorliegenden Erfindung liegt die Aufgabe zugrunde, ein Gelenk zwischen einem Getriebebetätigungsglied und einer Getriebegangschaltvorrichtung zu schaffen, das einerseits für einen ausgesprochen guten Fahrkomfort sorgt und sich andererseits auch durch Langlebigkeit und auch durch Sicherheit des Gangschaltvorgangs auszeichnet.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Gemäß der vorliegenden Erfindung ist ein Gelenk zwischen einem Getriebebetätigungsglied und einer Getriebegangschaltvorrichtung vorgesehen, das ein paar von Gelenkteilen zur jeweils kraftschlüssigen Verbindung mit dem Getriebebetätigungsglied und der Getriebegangschaltvorrichtung sowie einem zwischen den Gelenkteilen angeordneten Koppelteil und eine elastisch verformbare Vorrichtung aufweist, wobei die elastisch verformbare Vorrichtung eine das Koppelteil umgebende Dämpfungsvorrichtung ist, die das Koppelteil im schaltkraftübertragungsfreien Zustand des Gelenks derart beabstandet zu den Gelenkteilen hält, daß ein Freiweg zwischen den Koppelteil und den Gelenkteilen vorhanden ist.

Es bedeutet dies mit anderen Worten, daß das zwischen den Gelenkteilen vorgesehene Koppelteil im unbelasteten Zustand des Gelenks von der erfindungsgemäß vorgesehenen Dämpfungsvorrichtung von allen Bauteilen bzw. Einrichtungen der Gelenkteile getrennt ist, indem es durch die Dämpfungsvorrichtung allseitig beabstandet zu den entsprechenden Bauteilen oder auch Einrichtungen bzw. den Gelenkteilen gehalten ist. Die erfindungsgemäß vorgesehene Dämpfungsvorrichtung sorgt daher für eine ausgesprochen gute akkustische Entkopplung und verhindert dadurch die Übertragung störender Schwingungen vom Motor bzw. dem Getriebe auf den Fahrgastinnenraum.

Die Dämpfungsvorrichtung umgibt dabei das Koppelteil weitgehend allseitig derart, daß die Dämpfungsvorrichtung dafür sorgt, daß im schaltkraftübertragungsfreien Zustand des Gelenks eine mechanische Verbindung zwischen den Gelenkteilen und dem Koppelteil jeweils nur über die Dämpfungsvorrichtung hergestellt ist, die somit für die bereits angesprochene gute akkustische Entkopplung sorgt. Es ist dabei hervorzuheben, daß die Entkopplung in allen drei Raumrichtungen gewährleistet ist, da im schaltkraftübertragungsfreien Zustand das Koppelteil zu keinem der Gelenkteile eine unmittelbare direkte mechanische Verbindung aufweist, da das Koppelteil von der erfindungsgemäß vorgesehenen Dämpfungsvorrichtung von den jeweiligen Gelenkteilen allseitig beabstandet gehalten wird.

In vorteilhafter Weise ist dabei das Koppelteil ein sogenanntes Kreuzstück oder auch Kreuzgelenkteil mit zwei zueinander weitgehend rechtwinkligen und beabstandet zueinander angeordneten Durchgangsbohrungen. Diese Durchgangsbohrungen werden dabei in Fortführung der Erfindung von Gelenkzapfen durchsetzt, die in Bohrungen der Gelenkteile einsetzbar sind derart, daß das Kreuzstück beabstandet zwischen den Außenwänden der Gelenkteile angeordnet ist. Es ist diese beabstandete Anordnung deshalb von Bedeutung, da damit sichergestellt ist, daß im schaltkraftübertragungsfreien Zustand des Gelenks keine direkte mechanische Verbindung zwischen dem Kreuzstück und den Gelenkteilen ermöglicht ist.

In vorteilhafter Weise sind dabei in Fortführung der Erfindung zwischen dem Kreuzstück und dem Gelenkzapfen und/oder dem Kreuzstück und den Außenwänden der Gelenkteile vorzugsweise aus Kunststoff gebildete Buchsen angeordnet derart, daß das Kreuzstück im schaltkraftübertragungsfreien Zustand des Gelenks durch die Dämpfungsvorrichtung beabstandet zu den Buchsen angeordnet ist. Es bedeutet dies mit anderen Worten, daß eine direkte Anlage des Kreuzstücks an den Gelenkteilen auch durch die vorzugsweise aus Kunststoff gebildeten Buchsen verhindert ist, so daß eine die Schwingungsübertragung fördernde direkte mechanische Verbindung zwischen den beispielsweise aus Metall gebildeten Gelenkteilen und dem Kreuzstück sicher unterbunden ist.

Hierzu kann die gemäß der Erfindung vorgesehene Dämpfungsvorrichtung auch deshalb beitragen, da sie in diesem Fall aufgrund ihrer Eigenschaft des allseitigen Umgebens des Koppelteils dafür sorgt, daß selbst zwischen den schwingungsunterbindenden Kunststoffbuchsen und dem Koppelteil eine direkte mechanische Verbindung nicht stattfindet, da die Dämpfungsvorrichtung das Koppelteil allseitig umgibt und somit die Kunststoffbuchsen und das Koppelteil im Falle des Schaltvorgangs, wenn also das Koppelteil an den Kunststoffbuchsen zur Anlage kommen würde, immer noch akkustisch entkoppelt, indem die das Koppelteil umgebende Dämpfungsvorrichtung eine dämpfende Schicht zwischen dem Koppelteil und dem Kunststoffbuchsen legt.

Andererseits ist aber eine sichere mechanische Kraftübertragung zwischen den Gelenkteilen durch das Koppelteil sichergestellt, da bei einer entsprechenden Betätigung des Schalthebels der durch die Dämpfungsvorrichtung geschaffene Abstand zwischen dem Koppelteil und den Gelenkteilen aufgrund der elastischen Verformbarkeit der Dämpfungsvorrichtung überwindbar ist derart, daß die Schaltkraft sicher übertragen werden kann. Wie leicht ersichtlich, ist auch im Falle des Schaltvorgangs dadurch, daß die Dämpfungsvorrichtung das Koppelteil allseitig umgibt, die dämpfende Wirkung der Dämpfungsvorrichtung auch beim Schaltvorgang aufrechterhalten.

In Weiterbildung der Erfindung weist dabei die Dämpfungsvorrichtung im Bereich ihrer an den Gelenkteilen anliegenden Außenflächen Dichtlippen auf, die den Gelenkinnenraum vollständig und hermetisch nach außen abdichten. Es bedeutet dies mit anderen Worten, daß auch vermieden ist, daß Fremdkörper wie beispielsweise Staub und Schmutz von außen in den Gelenkinneraum eindringen können, so daß das erfindungsgemäße Gelenk eine ausgesprochen große Langlebigkeit aufweist.

Hierzu können die Dichtlippen die zwischen dem Kreuzstück und den Gelenkteilen angeordneten Buchsen hintergreifen, wobei in diesem Fall in vorteilhafter Weise die Buchsen eine zur Aufnahme der Dichtlippen vorgesehene umlaufende Ringnut aufweisen.

Dies heißt nun, daß die Dichtlippen der Dämpfungsvorrichtung in den durch die Ringnut gebildeten Zwischenraum zwischen den Kunststoffbuchsen und den Gelenkteilen greifen, das Koppelteil vollständig von der Dämpfungsvorrichtung umgeben ist und somit der Gelenkinnenraum vollständig gegen das Eindringen von Schmutz gesichert ist.

Es kann dabei die gemäß der Erfindung vorgesehene Dämpfungsvorrichtung vorzugsweise aus einem Gummiwerkstoff gebildet sein, es ist aber auch möglich, daß ein beliebiger anderer elastomerer Werkstoff hierzu zum Einsatz kommt. Im Falle der Bildung der Dämpfungsvorrichtung aus einem Gummiwerkstoff wird diese in vorteilhafter Weise mittels einer Tauchgummierung an dem beispielsweise aus Metall gebildetem Koppelglied angebracht, wobei diesem Vorgang ein Vulkanisiervorgang folgen kann.

Es macht dies deutlich, daß mit dem erfindungsgemäß vorgesehenen Gelenk eine akkustisch ausgesprochen vorteilhafte Entkopplung in allen drei Raumrichtungen geschaffen ist, daß aufgrund der zuverlässigen Abdichtung des Gelenkinnenraums zwischen den Kunststoffbuchsen und dem Kreuzstück kein Scheuern auftreten kann, da das Eindringen von Staub oder Schmutz in den zwischen den Kunststoffbuchsen und dem Kreuzstück vorgesehenen Spalt sicher vermieden ist und daß die akkustische Schwingungsentkopplung in allen drei Raumrichtungen ausschließlich durch die erfindungsgemäß vorgesehene Dämpfungsvorrichtung einstellbar ist, so daß das erfindungsgemäß geschaffene Gelenk an den Einsatz in vielen verschiedenen Typen von Kraftfahrzeugen anpaßbar ist.

Die Erfindung wird im folgenden anhand der Zeichnung näher erläutert. Diese zeigt in
- Fig. 1: ein Gelenk in Seitenansicht teilweise geschnitten und
- Fig. 2: einen Schnitt I-I nach Fig. 1 sowie
- Fig. 3: einen Schnitt entlang II-II nach Fig. 1.

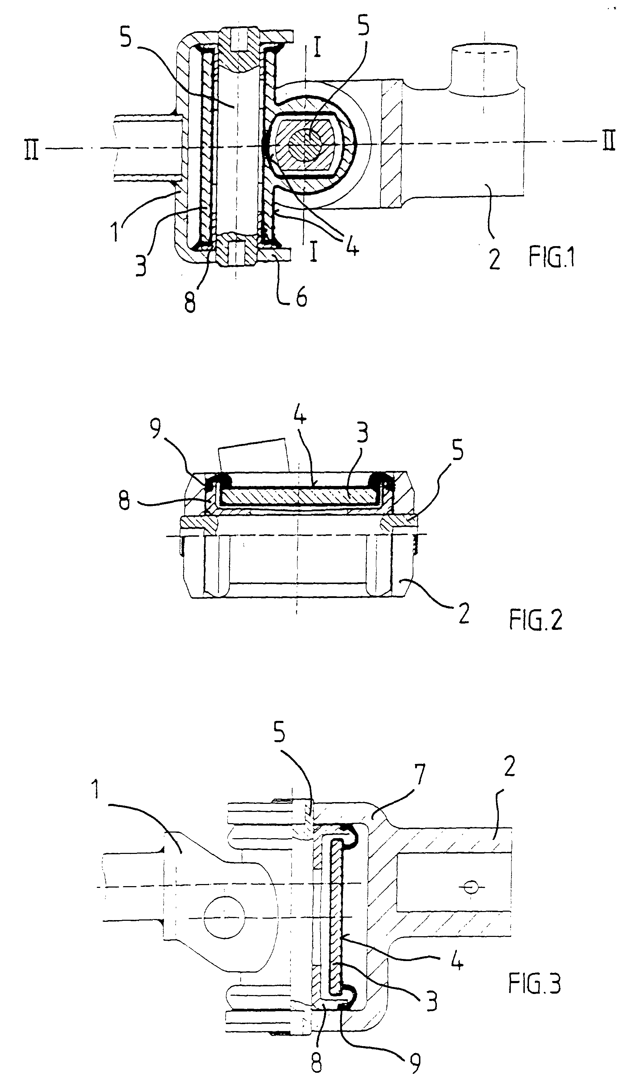

Wie aus der Zeichnung ersichtlich, weist das Gelenk im dargestellten Ausführungsbeispiel ein im Schnitt U-förmiges Gelenkteil 1 auf, dem ein - wie Fig. 3 zeigt - ebenfalls U-förmiges Gelenkteil 2 gegenüberliegt. Zwischen diesen beiden Gelenkteilen 1,2 ist ein Koppelteil, im vorliegenden Ausführungsbeispiel ein Kreuzstück 3 angeordnet. Das Kreuzstück 3 ist dabei allseitig von einer Dämpfungsvorrichtung 4 umgeben derart, daß es im dargestellten schaltkraftübertragungsfreien Zustand des Gelenks beabstandet zu den Gelenkteilen 1, 2 angeordnet ist. Dies bedeutet, daß im schaltkraftübertragungsfreien Zustand des Gelenks das Kreuzstück 3 von der Dämpfungsvorrichtung 4 im Abstand zu den Gelenkteilen 1, 2 gehalten wird, da die elastisch verformbare Dämpfungsvorrichtung 4 das Kreuzstück 3 allseitig umgibt und sich über die den Gelenkteilen 1, 2 - in dem aus der Zeichnung ersichtlichen zusammengebauten Zustand des Gelenks - zugeordneten Endbereiche des Kreuzstücks 3 hinaus erstreckt, so daß das Kreuzstück 3 im schaltkraftübertragungsfreien Zustand des Gelenks vor der Dämpfungsvorrichtung 4 allseitig beabstandet zu den U-förmigen Gelenkteilen 1, 2 gehalten wird.

Die Gelenkteile 1, 2 sind dabei beispielsweise auf Seiten des Gelenkteiles 2 mit einer nicht näher dargestellten Getriebegangschaltvorrichtung verbunden, während das Gelenkteil 1 mit einem ebenfalls nicht näher dargestellten Getriebebetätigungsglied kraftschlüssig verbunden sein kann.

Wie leicht ersichtlich, weist das Gelenk im dargestellten Ausführungsbeispiel Gelenkzapfen 5 auf, die sich durch im Kreuzstück 3 vorgesehene Durchgangsbohrungen erstrecken und bis in den U-förmigen Schenkeln 6, 7 der Gelenkteile 1, 2 angeordnete Bohrungen reichen und dort formschlüssig festgelegt sind.

Im gezeigten Ausführungsbeispiel ist zwischen den Gelenkzapfen 5 und dem Keuzstück 3 bzw. zwischen dem Kreuzstück 3 und den Schenkeln 6, 7 der Gelenkteile 1, 2 eine aus Kunststoff gebildete Buchse 8 angeordnet, die sich in axial Längsrichtung der Gelenkzapfen 5 um einen gewissen Teilbereich der Längserstrekkung der Gelenkzapfen erstreckt und im Bereich der Anordnung der Buchse 8 an den Schenkeln 7, 8 sich radial nach außen erstreckend vorgesehen ist derart, daß sie zwischen dem Kreuzstück 3 und den Schenkeln 6, 7 liegt.

Wie leicht aus Fig. 2 und Fig. 3 der Zeichnung ersichtlich, ist zwischen der Buchse 8 und dem Kreuzstück 3 ein Freiweg bzw. ein Abstand vorgesehen, so daß im schaltkraftübertragungsfreien Zustand des Gelenks eine Schwingungsübertragung zwischen dem Gelenkteil 1 und dem Gelenkteil 2 über das Kreuzstück 3 und damit auf den Fahrgastinnenraum sicher verhindert ist.

Wie insbesondere aus Fig. 2 und Fig. 3 der Zeichnung ersichtlich, weist die Dämpfungsvorrichtung 4 im dargestellten Ausführungsbeispiel im Bereich ihrer den Gelenkteilen 1, 2 zugeordneten Außenseiten Dichtlippen 9 auf, die sich in eine an der Buchse 8 vorgesehene umlaufende Ringnut erstrecken, so daß der gesamte Gelenkinnenraum sicher gegen das Eindringen von Schmutz oder Wasser von außen gesichert ist, so daß ein ausgesprochen langlebiges Gelenk geschaffen ist, das zudem einfach und unkompliziert sowie aus wenigen Bauteilen aufgebaut ist.

Im Falle eines Schaltvorganges wird beispielsweise das Gelenkteil 2 entlang seiner Längserstreckung axial bewegt, so daß der Gelenkzapfen 5 nach Überwindung des zwischen dem Gelenkzapfen 5 und dem Kreuzstück 3 vorgesehenen Abstands mit dem Kreuzstück 3 kraftschlüssig in Eingriff kommt und daher diese Schaltkraft auf das Gelenkteil 1 und das nicht dargestellte Getriebebetätigungsglied übertragen werden kann, wobei darauf hinzuweisen ist, daß zwischen der Buchse 8 und dem Kreuzstück 3 ein eine Gleitbewegung erlaubender geringfügiger Abstand vorgesehen ist. Selbst im Falle des kraftschlüssigen Schalteingriffs sind zwischen den kraftübertragenden Bauteilen der Gelenkteile 1, 2 und dem Kreuzstück 3 dämpfende Schichten der Dämpfungsvorrichtung 4 vorhanden, so daß auch beim Schaltvorgang die Übertragung störender Schwingungen vermieden ist.

Hinsichtlich Vorstehendem im einzelnen nicht näher erläuterter Merkmale der Erfindung wird im übrigen ausdrücklich auf die Ansprüche und die Zeichnung verwiesen.

## Patentansprüche

1. Gelenk zwischen einem Getriebebetätigungsglied und einer Getriebegangschaltvorrichtung, mit einem Paar von Gelenkteilen (1,2) zur jeweils kraftschlüssigen Verbindung mit dem Getriebebetätigungsglied und der Getriebegangschaltvorrichtung sowie einem zwischen den Gelenkteilen (1,2) angeordneten Koppelteil (3) und einer elastisch verformbaren Vorrichtung,
dadurch **gekennzeichnet**,
daß die elastisch verformbare Vorrichtung eine das Koppelteil (3) umgebende Dämpfungsvorrichtung (4) ist die das Koppelteil (3) im schaltkraftübertragungsfreien Zustand des Gelenks derart beabstandet zu den Gelenkteilen (1,2) hält, daß ein Freiweg zwischen dem Koppelteil und der Gelenkteilen (1,2) vorhanden ist.

2. Gelenk nach Anspruch 1,
dadurch **gekennzeichnet**,
daß das Koppelteil (3) ein Kreuzstück mit zwei zueinander weitgehend rechtwinklig und beabstandet angeordneten Durchgangsbohrungen ist.

3. Gelenk nach Anspruch 1 oder 2,
dadurch **gekennzeichnet**,
daß die Durchgangsbohrungen von Gelenkzapfen (5) durchsetzt sind, die in Bohrungen der Gelenkteile (1,2) einsetzbar sind derart, daß das Kreuzstück beabstandet zwischen Außenwänden der Gelenkteile (1,2) angeordnet ist.

4. Gelenk nach einem der Ansprüche 1 bis 3,
dadurch **gekennzeichnet**,
daß zwischen dem Kreuzstück (3) und den Gelenkzapfen (5) und/oder dem Kreuzstück (3) und Außenwänden der Gelenkteile (1,2) vorzugsweise aus Kunststoff gebildete Buchsen (8) angeordnet sind, derart, daß das Kreuzstück (3) im schaltkraftübertragungsfreien Zustand des Gelenks durch die Dämpfungsvorrichtung (4) beabstandet zu den Buchsen (8) angeordnet ist.

5. Gelenk nach einem der Ansprüche 1 bis 4,
dadurch **gekennzeichnet**,
daß die Dämpfungsvorrichtung (4) im Bereich ihrer an den Gelenkteilen (1,2) anliegenden Außenflächen Dichtlippen (9) aufweist, die den Gelenkinnenraum vollständig nach außen abdichten.

6. Gelenk nach einem der Ansprüche 1 bis 5,
dadurch **gekennzeichnet,**
daß die Dichtlippen (9) die zwischen dem Kreuzstück (3) und den Gelenkteilen (1,2) angeordneten Buchsen (8) hintergreifen.

7. Gelenk nach einem der Ansprüche 4 bis 6,
dadurch **gekennzeichnet**,
daß die Buchse (8) zur Aufnahme der Dichtlippe (9) eine umlaufende Ringnut aufweist.

8. Gelenk nach einem der Ansprüche 1 bis 7,
dadurch **gekennzeichnet,**
daß die Dämpfungsvorrichtung aus einem Gummiwerkstoff gebildet ist.

## Claims

1. A linkage between a gear actuating element and a gear shifting mechanism, comprising a pair of linkage parts (1, 2) for non-positively connecting to the gear-actuating element and the gear shifting mechanism, a coupling part (3) disposed between the linkage parts (1, 2) and an elastically deformable device, characterised in that the elastically deformable device is a damping device (4) surrounding the coupling part (3) and, when the linkage is in the state free from transmission of gear-shifting force, the damping device holds the coupling part (3) at a distance from the linkage parts (1, 2), so that a space is left between the coupling part and the linkage parts (1, 2).

2. A linkage according to claim 1, characterised in that the coupling part (3) is a cross-piece with two spaced-apart passage bores substantially at right angles to one another.

3. A linkage according to claim 1 or 2, characterised in that linkage pins (5) extend through the passage bores and are insertable into bores in the linkage parts (1, 2) so that the cross-piece is held apart from and between outer walls of the linkage parts (1, 2).

4. A linkage according to any of claims 1 to 3, characterised in that bushes (8), preferably of plastic, are disposed between the link pins (5) and/or the cross-piece (3) and outer walls of the linkage parts (1, 2) so as when the linkage is in the state where no gear-shifting force is transmitted, the damping device (4) holds the cross-piece (3) at a distance from the bushes (8).

5. A linkage according to any of claims 1 to 4, characterised in that the damping device (4), in the region of its outer surfaces abutting the linkage parts (1, 2), has sealing lips (9) which completely seal the interior of the linkage from the exterior.

6. A linkage according to any of claims 1 to 5, characterised in that the sealing lips (9) extend behind the bushes (8) disposed between the cross-piece (3) and the linkage parts (1, 2).

7. A linkage according to any of claims 4 to 6, characterised in that the sleeve (8) has a peripheral annular groove for receiving the sealing lip (9).

8. A linkage according to any of claims 1 to 7, characterised in that the damping device is made of a rubber material.

## Revendications

1. Articulation entre un organe d'actionnement de transmission et un dispositif de changement de vitesse de transmission, comprenant une paire d'éléments d'articulation (1, 2) pour créer une liaison par conjugaison de forces respectivement avec l'organe d'actionnement de transmission et avec le dispositif de changement de vitesse de transmission et comprenant un élément d'accouplement (3) disposé entre les éléments d'articulation (1, 2) et un dispositif déformable élastiquement, caractérisée en ce que le dispositif déformable élastiquement est un dispositif amortisseur (4) qui entoure l'élément d'accouplement (3) et qui, lorsque l'articulation ne transmet pas d'effort de changement de vitesse, maintient l'élément d'accouplement (3) à distance des éléments d'articulation (1, 2), de façon à créer une course libre entre l'élément d'accouplement et les éléments d'articulation (1, 2).

2. Articulation selon la revendication 1, caractérisée en ce que l'élément d'accouplement (3) est une pièce en croix pourvue de deux trous traversants disposés sensiblement à angle droit l'un par rapport à l'autre et distants l'un de l'autre.

3. Articulation selon la revendication 1 ou 2, caractérisée en ce que les trous traversants sont traversés par des tourillons d'articulation (5) qui peuvent être logés dans des trous des éléments d'articulation (1, 2), de sorte que la pièce en croix est disposée à distance entre les parois extérieures des éléments d'articulation (1, 2).

4. Articulation selon l'une des revendications 1 à 3, caractérisée en ce que des coussinets (8) réalisés de préférence en matière synthétique sont disposés entre la pièce en croix (3) et les tourillons d'articulation (5) et/ou entre la pièce en croix (3) et les parois extérieures des éléments d'articulation (1, 2), de sorte que, lorsque l'articulation ne transmet pas d'effort de changement de vitesse, la pièce en croix (3) est disposée à distance des coussinets (8) du fait du dispositif amortisseur (4).

5. Articulation selon l'une des revendications précédentes 1 à 4, caractérisée en ce que le dispositif amortisseur (4) comporte, dans la zone de ses surfaces extérieures en contact avec les éléments d'articulation (1, 2), des lèvres d'étanchéité (9) qui étanchent complètement l'intérieur de l'articulation par rapport à l'extérieur.

6. Articulation selon l'une des revendications 1 à 5, caractérisée en ce que les lèvres d'étanchéité (9) viennent en prise derrière les coussinets (8) disposés entre la pièce en croix (3) et les éléments d'articulation (1, 2).

7. Articulation selon l'une des revendications 4 à 6, caractérisée en ce que le coussinet (8) est pourvu d'une rainure annulaire périphérique pour recevoir la lèvre d'étanchéité (9).

8. Articulation selon l'une des revendications 1 à 7, caractérisée en ce que le dispositif amortisseur est constitué d'un matériau à base de caoutchouc.
